# EUROPEAN PATENT SPECIFICATION

(11) **EP 3 582 570 B1**
(45) Date of publication and mention of the grant of the patent: **26.07.2023**
(21) Application number: 17901246.3
(22) Date of filing: 13.12.2017
(51) Int. Cl.: H04W 72/12, H04W 72/23, H04L 5/00

(54) **METHOD FOR INDICATING SERVICE RESOURCE INDICATION CHANNEL OCCUPATION, APPARATUS, AND STORAGE MEDIUM**
VERFAHREN ZUR ANZEIGE DER BELEGUNG EINES DIENSTRESSOURCENANZEIGEKANALS, VORRICHTUNG UND SPEICHERMEDIUM
PROCÉDÉ D'INDICATION D'OCCUPATION DE CANAL D'INDICATION DE RESSOURCE DE SERVICE, APPAREIL ET SUPPORT DE STOCKAGE

(30) Priority: 17.03.2017 CN 201710159371
(43) Date of publication of application: 18.12.2019
(73) Proprietor: China Academy of Information and Communications Technology, Beijing 100191 (CN)
(72) Inventor: LIU, Xiaofeng, Beijing 100191 (CN)
(74) Representative: AWA Sweden AB
(86) International application number: PCT/CN2017/115852
(87) International publication number: WO 2018/166254

(56) References cited:
- WO-A1-2017/034194
- WO-A1-2017/039283
- CN-A- 105 979 597
- CN-A- 106 255 215
- US-A1- 2016 113 008
- FUJITSU: "Discussion on Preemption Indicator for Multiplexing eMBB and URLLC in Downlink", 3GPP DRAFT; R1-1701920 PREEMPTION BASED MULTIPLEXING FOR EMBB AND URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Athens, Greece; 20170213 - 20170217 12 February 2017 (2017-02-12), XP051209082, Retrieved from the Internet: URL:http://www.3gpp.org/ftp/Meetings_3GPP_ SYNC/RAN1/Docs/ [retrieved on 2017-02-12]
- SAMSUNG: "Summary of e-mail discussions on multiplexing eMBB and URLLC in DL", 3GPP DRAFT; R1-1700972 SUMMARY OF E-MAIL DISCUSSION ON MULTIPLEXING EMBB AND URLLC IN DL-SAMSUNG, 3RD GENERATION PARTNERSHIP PROJECT (3GPP), MOBILE COMPETENCE CENTRE ; 650, ROUTE DES LUCIOLES ; F-0692 , vol. RAN WG1, no. Spokane, USA; 20170116 - 20170120 10 January 2017 (2017-01-10), XP051203264, Retrieved from the Internet: URL:http://www.3gpp.org/ftp/tsg_ran/WG1_RL 1/TSGR1_AH/NR_AH_1701/Docs/ [retrieved on 2017-01-10]
- SAMSUNG: "Summary of e-mail discussions on multiplexing eMBB and URLLC in DL", Rl-1700972, TSG-RAN WG1 NR Ad-hoc Meeting, 20 January 2017 (2017-01-20), XP051203264,
- VIVO: "Discussion on DL multiplexing of eMBB and URLLC", Rl-1703392, 3GPP TSG RAN WG1 Meeting #88, 17 February 2017 (2017-02-17), XP051210520,

## Description

### TECHNICAL FIELD

The present application relates to the field of communication technologies, and more particularly, to a method and apparatus for indicating the occupation of service resources through an indication channel, and a storage medium.

### BACKGROUND

In future network transmission, besides a traditional Enhanced Mobile Broadband (eMBB) service, a large number of other services need to be transmitted and supported simultaneously, such as an Ultra Reliable Low Latency Communication (URLLC) service. The URLLC service has special requirements for the delay and reliability of transmission.

To meet the transmission requirements of the URLLC service, an eMBB service under transmission needs to be multiplexed by puncturing to transmit the URLLC service.

When the eMBB service is multiplexed, it is required to indicate a position for the transmission of the URLLC service through an indication channel. Accordingly, a problem to be solved is how to reduce the impact on the eMBB service and the overhead of the indication channel for the transmission of the URLLC service while ensuring the transmission of the URLLC service.

An example of prior art can be found in FUJITSU: "Discussion on Preemption Indicator for Multiplexing eMBB and URLLC in Downlink", 3GPP TDoc, 20170213-20170217, Athens, Greece, which discloses a preemption indication method. Some frequency resource within the eMBB frequency region can be possibly used for URLLC traffic. When URLLC traffic actually arrives, the resource scheduled to be occupied by eMBB will be preempted and scheduled to transmit URLLC traffic instead. To support the preemption method, the preemption indicator signaling requires one bit to let the eMBB UE know the existence of a URLLC allocation. To avoid soft buffer pollution for eMBB UEs, some control information (say N bits) on the resource preempted for URLLC data transmission should be included in addition in the preemption indicator signaling. This informs the eMBB UE of the actual resource used by URLLC data transmission.

Another example of prior art can be found in SAMSLTNG: "Summary of e-mail discussions on multiplexing eMBB and URLLC in DL", 3GPP TDoc, 20170116-20170120, Spokane, USA, which discloses preemption/superposition-based multiplexing of eMBB and URLLC in DL. The indication of time/frequency region where eMBB is impacted by URLLC is beneficial to improve eMBB performance. The indication timing can be categorized into two cases. The first case is to indicate during ongoing eMBB transmission, i.e., within current eMBB TTI, and the second case is to indicate after eMBB transmission, i.e., after current eMBB TTI. Scheduling-based approach means that URLLC transmission does not occur in the resources scheduled for ongoing eMBB traffic.

Another example of prior art can be found in US 2016/113008 A1, which discloses techniques for preempting resource allocations to one or more UEs in the event that delay sensitive data is received. A resource allocation of a number of symbols may be granted to a first UE for first associated data to be transmitted. Subsequently, data may be received for a second UE that is more delay sensitive than the first data. The resource allocation to the first UE may be preempted, and resources allocated to the second UE for the second data within a variable length transmission time interval (TTI) of the resource allocation to the first UE. UEs may monitor for preemption during transmissions to other UEs in order to receive new resource grants associated with the preempted resource grant. Whether a UE monitors transmissions for preemption may be determined based on a quality or service (QoS) of the UE.

### SUMMARY

Embodiments of the present application provide a method and apparatus for indicating the occupation of service resources through an indication channel, and a storage medium.

A method for indicating the occupation of service resources through an indication channel includes:
configuring, by a gNodeB, a time domain indication and a frequency domain indication for indicating occupation of Enhanced Mobile Broadband, eMBB, service resources by an Ultra Reliable Low Latency Communication, URLLC, service through an indication channel, wherein, for the time domain indication, S bits are used to indicate that 2^{S}-1 possible symbol positions within the eMBB service are allocated to the URLLC service, and K-S bits are used to represent duration length of the URLLC service; for the frequency domain indication, T bits are used to represent 2^{T} occupation states of the eMBB service, and the i^{th} occupation state represents that 1/2ⁱ⁻¹ frequency domain resources are occupied; K is the number of bits for the time domain indication, S is an integer larger than 0 and smaller than K, T is the number of bits for the frequency domain indication, and i is an integer larger than 0 and smaller than or equal to 2^{T}; when T is equal to 1, there are two occupation states of the eMBB service, and the two occupation states of the eMBB service comprise an occupation state that all frequency domain resources are occupied and an occupation state that 1/2 frequency domain resources are occupied; when T is equal to 2, there are four occupation states of the eMBB service, and the four occupation states of the eMBB service comprise an occupation state that all frequency domain resources are occupied, an occupation state that 1/2 frequency domain resources are occupied, an occupation state that 1/4 frequency domain resources are occupied and an occupation state that 1/8 frequency domain resources are occupied;
(101) when transmitting the URLLC service during transmission of the eMBB service, determining a symbol position for the transmission of the URLLC service in the time domain, wherein the symbol position is closest to transmission time of the URLLC service among the 2^{S}-1 possible symbol positions, and determining an occupation state of the frequency domain resources according to the amount of data of the URLLC service;
(102) transmitting information of the indication channel for the URLLC service, which includes: according to the configured time domain indication, determining that S bits are used to represent the symbol position closest to the transmission time of the URLLC service, and determining that K-S bits are used to represent the duration length of the URLLC service; and according to the configured frequency domain indication, determining that T bits are used to represent the occupation state that the frequency domain resources are occupied by the URLLC service; and
(103) when receiving the information of the indication channel for the URLLC service, parsing, by a User Equipment, UE, contents of the URLLC service according to a time domain indication and a frequency domain indication for indicating the occupation of the eMBB service resources by the URLLC service through the indication channel that are stored locally.

An apparatus for indicating the occupation of service resources through an indication channel includes:
one or more storages, and
one or more processors; wherein
the one or more storages store one or more instruction modules, configured to be executed by the one or more processors;
the one or more instruction modules comprise:
   a configuring unit (401), configured to configure a time domain indication and a frequency domain indication for indicating occupation of Enhanced Mobile Broadband, eMBB, service resources by an Ultra Reliable Low Latency Communication, URLLC, service through an indication channel, wherein, for the time domain indication, S bits are used to indicate that 2^{S}-1 possible symbol positions within the eMBB service are allocated to the URLLC service, and K-S bits are used to represent duration length of the URLLC service; for the frequency domain indication, T bits are used to represent 2^{T} occupation states of the eMBB service, and the i^{th} occupation state represents that 1/2ⁱ⁻¹ frequency domain resources are occupied; K is the number of bits for the time domain indication, S is an integer larger than 0 and smaller than K, T is the number of bits for the frequency domain indication, and i is an integer larger than 0 and smaller than or equal to 2^{T}; when T is equal to 1, there are two occupation states of the eMBB service, and the two occupation states of the eMBB service comprise an occupation state that all frequency domain resources are occupied and an occupation state that 1/2 frequency domain resources are occupied; when T is equal to 2, there are four occupation states of the eMBB service, and the four occupation states of the eMBB service comprise an occupation state that all frequency domain resources are occupied, an occupation state that 1/2 frequency domain resources are occupied, an occupation state that 1/4 frequency domain resources are occupied and an occupation state that 1/8 frequency domain resources are occupied;
   a transmitting unit (402), configured to, when transmitting the URLLC service during transmission of the eMBB service, determine a symbol position for the transmission of the URLLC service in the time domain, wherein the symbol position is closest to transmission time of the URLLC service among the 2^{S}-1 possible symbol positions, and determine an occupation state of the frequency domain resources according to the amount of data of the URLLC service; transmit the information of the indication channel for the URLLC service, which includes: according to the configured time domain indication, determining that S bits are used to represent the symbol position closest to the transmission time of the URLLC service, and determining that K-S bits are used to represent the duration length of the URLLC service; and according to the configured frequency domain indication, determining that T bits are used to represent the occupation state that the frequency domain resources are occupied by the URLLC service; enable a User Equipment, UE, to, when receiving information of the indication channel for the URLLC service, parse contents of the URLLC service according to a time domain indication and a frequency domain indication for indicating the occupation of the eMBB service resources by the URLLC service through the indication channel that are stored locally.

A non-transitory storage medium is provided, storing computer-readable instructions, which when executed by at least one processor cause the at least one processor to perform the above method.

### BRIEF DESCRIPTION OF THE DRAWINGS

Fig. 1 is a flowchart illustrating a method for indicating the occupation of eMBB service resources by a URLLC service through an indication channel according to various embodiments of the present application.
Fig. 2 is a diagram illustrating the occupation of eMBB service data by a URLLC service according to various embodiments of the present application.
Fig. 3 is a diagram illustrating an internal structure of a gNodeB (or an apparatus for indicating the occupation of resources through an indication channel) according to various embodiments.
Fig. 4 is a diagram illustrating an apparatus 400 for indicating the occupation of resources through an indication channel according to various embodiments.

### DESCRIPTION OF EMBODIMENTS

In order to make the object, technical solution and merits of the present application clearer, the present application will be illustrated in detail hereinafter with reference to the accompanying drawings and specific embodiments. The embodiments described herein are merely used to illustrate the present application, but are not used to limit the present application.

Embodiments of the present application provide a method for indicating the occupation of eMBB service resources by a URLLC service through an indication channel. The method is applied to a system including a gNodeB and a UE (User Equipment). Through pre-configuring a time domain indication and a frequency domain indication for indicating the occupation of the eMBB service resources by the URLLC service through an indication channel, as few K+S bits as possible are used to indicate a position for the transmission of the URLLC service, the duration length of the URLLC service and resource occupation by the URLLC service in the frequency domain. In this case, the impact of the URLLC service on the eMBB service and the overhead of the indication channel for the transmission of the URLLC service can be reduced while ensuring the transmission of the URLLC service.

In various embodiments, the gNodeB pre-configures the time domain indication and the frequency domain indication for indicating the occupation of the eMBB service resources by the URLLC service through the indication channel, which is illustrated as follows.

For the time domain indication, a total of K bits are used for indication. S bits among the K bits are used to indicate that 2^{S}-1 possible symbol positions within the eMBB service are allocated to the URLLC service. That is, the S bits are used to represent 2^{S} states. 2^{S}-1 states may identify 2^{S}-1 symbol positions, and the remaining state may not be used. The S bits among the K bits may be consecutive or inconsecutive. In various embodiments, for convenience, the first S consecutive bits or the last S consecutive bits of the K bits may be used. K is the number of bits for the time domain indication, and is an integer larger than 0. S is an integer larger than 0 and smaller than K.

Hereinafter, various embodiments are provided to illustrate the time domain indication.

A first embodiment is described as follows.

When K is equal to 3 and S is equal to 2, three possible symbol positions within the eMBB service are allocated to the URLLC service, which include the 2^{nd} symbol, the 4^{th} symbol and the 6^{th} symbol. The 2^{nd} symbol is represented with 00, the 4^{th} symbol is represented with 01 and the 6^{th} symbol is represented with 10. Herein, the first two consecutive bits of the K bits are used to indicate a symbol starting position, and 11 is not used for indication. In practical applications, any one of the four states may be selected not to identify the symbol position, and the remaining three states may be configured according to habits to indicate which symbol starting position.

Herein, a possible symbol starting position may be a symbol starting position determined according to practical applications, of cause, may also be another symbol starting position determined according to a practical application environment, which is not limited.

A second embodiment is described as follows.

When K is equal to 2 and S is equal to 1, one possible symbol position within the eMBB service is allocated to the URLLC service, i.e., the 4^{th} symbol, which is represented with 0.

In various embodiments, the 4^{th} symbol may be represented with 1, and 0 is not used for indication.

The forgoing embodiments illustrate two methods for indicating the symbol starting position, and the solution provided by the present application is not limited to the two embodiments.

The duration length of the URLLC service is represented with K-S bits.

When K is equal to 3 and S is equal to 2, or K is equal to 2 and S is equal to 1, the duration length of the URLLC service is represented with 1 bit. For example, 0 is used to represent that the duration length is 1, and 1 is used to represent that the duration length is 2, vice versa.

For the frequency domain indication, according to the invention, T bits are used to represent 2^{T} occupation states of the eMBB service, and the i^{th} occupation state represents that 1/2ⁱ⁻¹ frequency domain resources are occupied. T is the number of bits for the frequency domain indication, and i is an integer larger than 0 and smaller than or equal to 2^{T}.

T may be equal to 1 or 2.

When T is equal to 1, there are two occupation states of the eMBB service. The following two occupation states of the eMBB service are represented with 0 and 1 respectively. The two occupation states include an occupation state that all frequency domain resources are occupied and an occupation state that 1/2 frequency domain resources are occupied. It is not limited herein that 0 is used to represent the occupation state that all frequency domain resources are occupied or 1 is used to represent the occupation state that 1/2 frequency domain resources are occupied.

When T is equal to 2, there are four occupation states of the eMBB service. The following four occupation states of the eMBB service are represented with 00, 01, 10 and 11 respectively. The four occupation states include: an occupation state that all frequency domain resources are occupied, an occupation state that 1/2 frequency domain resources are occupied, an occupation state that 1/4 frequency domain resources are occupied and an occupation state that 1/8 frequency domain resources are occupied. It is not limited herein that which bit is used to represent that which frequency domain resources are occupied. When T is equal to 2, it is more suitable for a case that a single user occupies a particularly large system bandwidth.

The occupation of 1/2 frequency domain resources indicates that half of a minimum available frequency domain scheduling unit of a current user is occupied. If N available frequency domain scheduling units of the current user are occupied, it is indicated that the URLLC service occupies N/2 scheduling units starting from the beginning of the frequency domain, where N is an even number. If N is an odd number, it is indicated that the URLLC service occupies N/2-1 scheduling units starting from the beginning of the frequency domain. When T is equal to 2, the occupation state that all frequency domain resources are occupied and the occupation state that 1/2 frequency domain resources are occupied are both the same as those when T is equal to 1. For the occupation state that 1/4 frequency domain resources are occupied and the occupation state that 1/8 frequency domain resources are occupied, the occupied resources are respectively 1/4 and 1/8 minimum available frequency domain scheduling unit of the current user. If the value of N/2, N/4 or N/8 is not an integer, the value of N/2, N/4 or N/8 is rounded down.

The occupation position of frequency domain resources is determined according to a system default frequency scheduling order. For example, if the system default frequency scheduling order is from high frequency to low frequency, the occupation position is from high frequency to low frequency, vice versa.

In various embodiments, a UE may locally configure and store the time domain indication and the frequency domain indication for indicating the occupation of the eMBB service resources by the URLLC service through the indication channel, which are both the same as those configured by the gNodeB. The time domain indication and the frequency domain indication may also be configured by the gNodeB, then the gNodeB transmits the time domain indication and the frequency domain indication to the UE, and the UE stores them locally so as to receive the URLLC service.

With reference to the accompanying drawings, a process of indicating the occupation of the eMBB service resources by the URLLC service through the indication channel will be described in detail according to various embodiments of the present application.

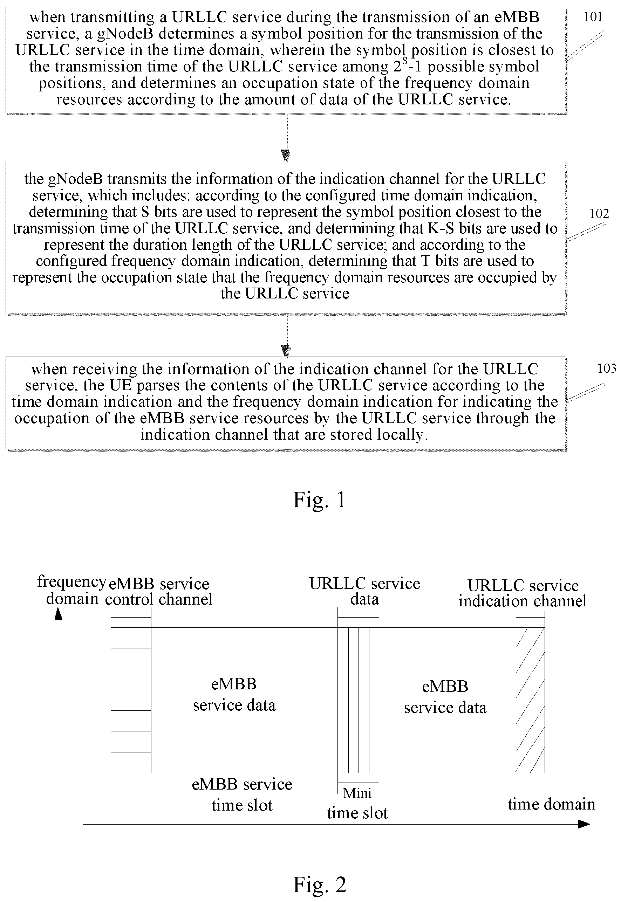

Referring to Fig. 1, Fig. 1 is a flowchart illustrating a method for indicating the occupation of eMBB service resources by a URLLC service through an indication channel according to various embodiments of the present application. The method includes the following blocks.

At block 101, when transmitting a URLLC service during the transmission of an eMBB service, a gNodeB determines a symbol position for the transmission of the URLLC service in the time domain, wherein the symbol position is closest to the transmission time of the URLLC service among 2^{S}-1 possible symbol positions, and determines an occupation state of the frequency domain resources according to the amount of data of the URLLC service.

At block 102, the gNodeB transmits the information of the indication channel for the URLLC service, which includes: according to the configured time domain indication, determining that S bits are used to represent the symbol position closest to the transmission time of the URLLC service, and determining that K-S bits are used to represent the duration length of the URLLC service; and according to the configured frequency domain indication, determining that T bits are used to represent the occupation state that the frequency domain resources are occupied by the URLLC service.

At block 103, when receiving the information of the indication channel for the URLLC service, the UE parses the contents of the URLLC service according to the time domain indication and the frequency domain indication for indicating the occupation of the eMBB service resources by the URLLC service through the indication channel that are stored locally.

Because the time domain indication information and the frequency domain indication information for the URLCC service can be determined accurately, it can be determined that which eMBB service resources are occupied by the URLLC service, thereby accurately demodulating the eMBB service.

A detailed channel indication method is described as follows. For example, K is set to 3, S is set to 2 and T is set to 1. The first two consecutive bits of 3 bits are used to identify a symbol starting position. Particularly, 00 represents that the starting position is the 2^{nd} symbol, 01 represents that the starting position is the 4^{th} symbol, 10 represents that the starting position is the 6^{th} symbol, and 11 is not used for indication.

The last one bit of the 3 bits is used to represent the duration length of the URLCC service. 0 represents that the duration length is 1, and 1 represents that the duration length is 2.

The occupation states of resources are represented with 1 bit, 0 represents that all frequency domain resources are occupied, and 1 represents that 1/2 frequency domain resources are occupied.

If the gNodeB needs to transmit the URLCC service during the transmission of the eMBB service and the eMBB service is starting at the 3^{rd} symbol, the gNodeB selects the 4^{th} symbol closest to the 3^{rd} symbol as a transmission starting position of the URLCC service, and uses 01 to indicate the transmission starting position. If the URLLC service needs two consecutive symbols, the 4^{th} and 5^{th} symbols are occupied, which are represented with 1. In the frequency domain, if all frequency domain resources are occupied, 0 is used to represent this case.

As can be seen from the above, 0110 is used to perform channel indication for the URLLC service.

When receiving the information of the channel indication, the UE can learn from 0110 according to the locally stored related indication information that the URLLC service begins to be transmitted from the 4^{th} symbol and continues until the 5^{th} symbol. Accordingly, the URLLC service is transmitted through occupying all frequency domain resources.

As can be seen, in various embodiments of the present application, the channel indication can be implemented using K+T bits. According to practical applications, the value of K+T can be made as small as possible to reduce the overhead of channel indication.

During the transmission of the channel indication, the transmission mode of the K+T bits, for example, a modulation encoding mode, and specific position are not limited, and the K+T bits may be transmitted on any symbol of the eMBB service after the URLLC service is transmitted.

Referring to Fig. 2, Fig. 2 is a diagram illustrating the occupation of eMBB service data by a URLLC service according to various embodiments of the present application. In Fig. 2, an eMBB service is transmitted using a longer eMBB service time slot, and the URLLC service is transmitted by a Mini time slot. Since the URLLC service occupies the transmission of the eMBB service, an indication channel for the URLLC service is introduced to ensure the accurate modulation of the eMBB service, and the transmission location of the information of the indication channel is the last symbol of the eMBB service.

To sum up, in the embodiments of the present application, through pre-configuring the time domain indication and the frequency domain indication for indicating the occupation of the eMBB service resources by the URLLC service through the indication channel, as few K+S bits as possible are used to indicate the position for the transmission of the URLLC service, the duration length of the URLLC service and resource occupation by the URLLC service in the frequency domain. In this case, the impact of the URLLC service on the eMBB service and the overhead of the indication channel for the transmission of the URLLC service can be reduced while ensuring the transmission of the URLLC service.

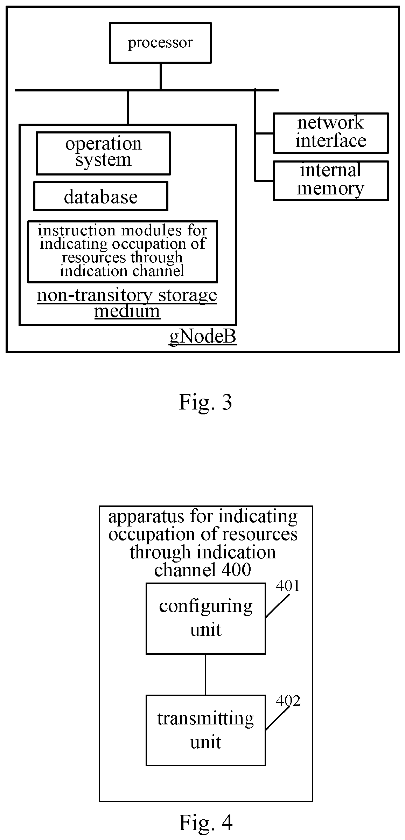

Fig. 3 is a diagram illustrating an internal structure of a gNodeB (or an apparatus for indicating the occupation of resources through an indication channel) according to various embodiments. As shown in Fig. 3, the gNodeB includes a processor, a non-transitory storage medium, an internal memory and a network interface, which are connected with each other by a system bus. The non-transitory storage medium of the gNodeB stores an operation system, a database and instruction modules in the apparatus for indicating the occupation of resources through the indication channel, i.e., instruction modules for carrying out the method for indicating the occupation of resources through an indication channel. The database may include a frequency domain information database, a time domain information database and a database for the occupation of the eMBB service resources by the URLLC service. The instruction modules in the apparatus for indicating the occupation of resources through the indication channel may implement the method for indicating the occupation of resources through the indication channel, wherein the method is applicable to the gNodeB. The processor of the gNodeB may provide a computing and controlling capability to support the running of the gNodeB. The internal memory of the gNodeB may provide a running environment for the instruction modules in the apparatus for indicating the occupation of resources through the indication channel, wherein the instruction modules are stored in the non-transitory storage medium. The internal memory may store computer-readable instructions, which when executed by the processor cause the processor to perform the method for indicating the occupation of resources through the indication channel. The network interface of the gNodeB may be used to communicate with an external UE, for example, via which the gNodeB may transmit the URLLC service and the eMBB service to the external UE, and may indicate the transmission position. The gNodeB may be implemented using a separately gNodeB or a gNodeB group composed of multiple gNodeBs. Those skilled in the art can understand that, the structure shown in Fig. 3 is only a part of the structure related to the solution of the present application, and is not used to limit the gNodeB to which the solution of the present application is applied. In some embodiments, the gNodeB may include more or fewer components than the shown in the figures, or some components may be combined, or the components may be arranged with different modes.

Fig. 4 is a diagram illustrating an apparatus 400 for indicating the occupation of resources through an indication channel (for example, a gNodeB) according to various embodiments. The apparatus 400 for indicating the occupation of resources through an indication channel includes:
one or more storages (for example, the non-transitory storage medium shown in Fig. 3), and
one or more processors; wherein
the one or more storages store one or more instruction modules, configured to be executed by the one or more processors.

Referring to Fig. 4, the one or more instruction modules include the following units.

A configuring unit 401 is configured to configure a time domain indication and a frequency domain indication for indicating the occupation of eMBB service resources by a URLLC service through an indication channel. For the time domain indication, S bits are used to indicate that 2^{S}-1 possible symbol positions within the eMBB service are allocated to the URLLC service, and K-S bits are used to represent the duration length of the URLLC service. For the frequency domain indication, T bits are used to represent 2^{T} occupation states of the eMBB service, and the i^{th} occupation state represents that 1/2ⁱ⁻¹ frequency domain resources are occupied. K is the number of bits for the time domain indication, S is an integer larger than 0 and smaller than K, T is the number of bits for the frequency domain indication, and i is an integer larger than 0 and smaller than or equal to 2^{T}.

A transmitting unit 402 is configured to, when transmitting the URLLC service during transmission of the eMBB service, determine a symbol position for the transmission of the URLLC service in the time domain, wherein the symbol position is closest to transmission time of the URLLC service among the 2^{S}-1 possible symbol positions, and determine an occupation state of the frequency domain resources according to the amount of data of the URLLC service; enable a User Equipment (UE) to, when receiving information of the indication channel for the URLLC service, parse contents of the URLLC service according to a time domain indication and a frequency domain indication for indicating the occupation of the eMBB service resources by the URLLC service through the indication channel that are stored locally; and transmit the information of the indication channel for the URLLC service, which includes: according to the configured time domain indication, determining that S bits are used to represent the symbol position closest to the transmission time of the URLLC service, and determining that K-S bits are used to represent the duration length of the URLLC service; and according to the configured frequency domain indication, determining that T bits are used to represent the occupation state that the frequency domain resources are occupied by the URLLC service.

S represents the first S consecutive bits or the last S consecutive bits of K bits.

In an embodiment, when K is equal to 3 and S is equal to 2, three possible symbol positions within the eMBB service are allocated to the URLLC service, which include the 2^{nd} symbol, the 4^{th} symbol and the 6^{th} symbol. The 2^{nd} symbol is represented with 00, the 4^{th} symbol is represented with 01 and the 6^{th} symbol is represented with 10.

In another embodiment, when K is equal to 2 and S is equal to 1, one possible symbol position within the eMBB service is allocated to the URLLC service, i.e., the 4^{th} symbol, which is represented with 0.

In another embodiment, when T is equal to 1, there are two occupation states of the eMBB service. The following two occupation states of the eMBB service are represented with 0 and 1 respectively. The two occupation states include: an occupation state that all frequency domain resources are occupied and an occupation state that 1/2 frequency domain resources are occupied.

In another embodiment, when T is equal to 2, there are four occupation states of the eMBB service. The following four occupation states of the eMBB service are represented with 00, 01, 10 and 11 respectively. The four occupation states include: an occupation state that all frequency domain resources are occupied, an occupation state that 1/2 frequency domain resources are occupied, an occupation state that 1/4 frequency domain resources are occupied and an occupation state that 1/8 frequency domain resources are occupied.

Those skilled in the art can understand that all or part of steps in the above embodiments can be implemented by instructing related hardware by a program. The program may be stored in a non-transitory computer-readable storage medium, and when executed, includes the flows of the above methods. The storage medium may be a disk, a Compact Disc (CD), a Read-Only Memory (ROM), etc.

Embodiments of the present application also provide a non-transitory storage medium. The non-transitory storage medium stores computer-readable instructions, which may cause at least one processor to perform the above methods.

The technical features of the above embodiments may be arbitrarily combined. For the sake of simplicity, not all possible combinations of the technical features in the above embodiments are described. However, as long as there is no contradiction in the combination of these technical features, it should be considered within the scope of the specification.

The foregoing is several embodiments. The scope of protection should be defined by the claims.

## Claims

1. A method for indicating occupation of service resources through an indication channel, comprising:
configuring, by a gNodeB, a time domain indication and a frequency domain indication for indicating occupation of Enhanced Mobile Broadband, eMBB, service resources by an Ultra Reliable Low Latency Communication, URLLC, service through an indication channel, wherein for the time domain indication, S bits are used to indicate that 2^{S}-1 possible symbol positions within the eMBB service are allocated to the URLLC service, and K-S bits are used to represent duration length of the URLLC service; for the frequency domain indication, T bits are used to represent 2^{T} occupation states of the eMBB service, and the i^{th} occupation state represents that 1/2ⁱ⁻¹ frequency domain resources are occupied; K is the number of bits for the time domain indication, S is an integer larger than 0 and smaller than K, T is the number of bits for the frequency domain indication, and i is an integer larger than 0 and smaller than or equal to 2^{T}; when T is equal to 1, there are two occupation states of the eMBB service, and the two occupation states of the eMBB service comprise an occupation state that all frequency domain resources are occupied and an occupation state that 1/2 frequency domain resources are occupied; when T is equal to 2, there are four occupation states of the eMBB service, and the four occupation states of the eMBB service comprise an occupation state that all frequency domain resources are occupied, an occupation state that 1/2 frequency domain resources are occupied, an occupation state that 1/4 frequency domain resources are occupied and an occupation state that 1/8 frequency domain resources are occupied;
(101) when transmitting the URLLC service during transmission of the eMBB service, determining a symbol position for the transmission of the URLLC service in the time domain, wherein the symbol position is closest to transmission time of the URLLC service among the 2^{S}-1 possible symbol positions, and determining an occupation state of the frequency domain resources according to the amount of data of the URLLC service;
(102) transmitting information of the indication channel for the URLLC service, which includes: according to the configured time domain indication, determining that S bits are used to represent the symbol position closest to the transmission time of the URLLC service, and determining that K-S bits are used to represent the duration length of the URLLC service; and according to the configured frequency domain indication, determining that T bits are used to represent the occupation state that the frequency domain resources are occupied by the URLLC service; and
(103) when receiving the information of the indication channel for the URLLC service, parsing, by a User Equipment, UE, contents of the URLLC service according to a time domain indication and a frequency domain indication for indicating the occupation of the eMBB service resources by the URLLC service through the indication channel that are stored locally.

2. The method of claim 1, wherein
S represents the first S consecutive bits or the last S consecutive bits of K bits.

3. The method of claim 1, wherein
when K is equal to 3 and S is equal to 2, three possible symbol positions within the eMBB service is allocated to the URLLC service; wherein the three symbol positions comprise the 2^{nd} symbol, the 4^{th} symbol and the 6^{th} symbol, the 2^{nd} symbol is represented with 00, the 4^{th} symbol is represented with 01 and the 6^{th} symbol is represented with 10.

4. The method of claim 1, wherein
when K is equal to 2 and S is equal to 1, one possible symbol position within the eMBB service is allocated to the URLLC service; wherein the symbol position is the 4^{th} symbol, and the 4^{th} symbol is represented with 0.

5. The method of claim 1, wherein
the occupation state that all frequency domain resources are occupied and the occupation state that 1/2 frequency domain resources are occupied are represented with 0 and 1 respectively.

6. The method of claim 1, wherein
the occupation state that all frequency domain resources are occupied, the occupation state that 1/2 frequency domain resources are occupied, the occupation state that 1/4 frequency domain resources are occupied and the occupation state that 1/8 frequency domain resources are occupied are represented with 00, 01, 10 and 11 respectively.

7. The method of any of claims 1 to 6, wherein
a occupation position of frequency domain resources is determined according to a system default frequency scheduling order.

8. The method of any of claims 1 to 6, wherein
the time domain indication and the frequency domain indication for indicating the occupation of the eMBB service resources by the URLLC service through the indication channel are configured and stored locally by the UE, or is received from the gNodeB and is stored by the UE.

9. An apparatus for indicating occupation of resources through an indication channel, comprising:
one or more storages, and
one or more processors; wherein
the one or more storages store one or more instruction modules, configured to be executed by the one or more processors;
the one or more instruction modules comprise:
a configuring unit (401), configured to configure a time domain indication and a frequency domain indication for indicating occupation of Enhanced Mobile Broadband, eMBB, service resources by an Ultra Reliable Low Latency Communication, URLLC, service through an indication channel, **characterized in that**, for the time domain indication, S bits are used to indicate that 2^{S}-1 possible symbol positions within the eMBB service are allocated to the URLLC service, and K-S bits are used to represent duration length of the URLLC service; for the frequency domain indication, T bits are used to represent 2^{T} occupation states of the eMBB service, and the i^{th} occupation state represents that 1/2ⁱ⁻¹ frequency domain resources are occupied; K is the number of bits for the time domain indication, S is an integer larger than 0 and smaller than K, T is the number of bits for the frequency domain indication, and i is an integer larger than 0 and smaller than or equal to 2^{T}; when T is equal to 1, there are two occupation states of the eMBB service, and the two occupation states of the eMBB service comprise an occupation state that all frequency domain resources are occupied and an occupation state that 1/2 frequency domain resources are occupied; when T is equal to 2, there are four occupation states of the eMBB service, and the four occupation states of the eMBB service comprise an occupation state that all frequency domain resources are occupied, an occupation state that 1/2 frequency domain resources are occupied, an occupation state that 1/4 frequency domain resources are occupied and an occupation state that 1/8 frequency domain resources are occupied;
a transmitting unit (402), configured to, when transmitting the URLLC service during transmission of the eMBB service, determine a symbol position for the transmission of the URLLC service in the time domain, wherein the symbol position is closest to transmission time of the URLLC service among the 2^{S}-1 possible symbol positions, and determine an occupation state of the frequency domain resources according to the amount of data of the URLLC service; transmit the information of the indication channel for the URLLC service, which includes: according to the configured time domain indication, determining that S bits are used to represent the symbol position closest to the transmission time of the URLLC service, and determining that K-S bits are used to represent the duration length of the URLLC service; and according to the configured frequency domain indication, determining that T bits are used to represent the occupation state that the frequency domain resources are occupied by the URLLC service; enable a User Equipment, UE, to, when receiving information of the indication channel for the URLLC service, parse contents of the URLLC service according to a time domain indication and a frequency domain indication for indicating the occupation of the eMBB service resources by the URLLC service through the indication channel that are stored locally.

10. The apparatus of claim 9, wherein
S represents the first S consecutive bits or the last S consecutive bits of K bits.

11. The apparatus of claim 9, wherein
when K is equal to 3 and S is equal to 2, three possible symbol positions within the eMBB service are allocated to the URLLC service; wherein the three symbol positions comprise the 2^{nd} symbol, the 4^{th} symbol and the 6^{th} symbol, the 2^{nd} symbol is represented with 00, the 4^{th} symbol is represented with 01 and the 6^{th} symbol is represented with 10.

12. The apparatus of claim 9, wherein
when K is equal to 2 and S is equal to 1, one possible symbol position within the eMBB service is allocated to the URLLC service; wherein the symbol position is the 4^{th} symbol, and the 4^{th} symbol is represented with 0.

13. The apparatus of claim 9, wherein
the occupation state that all frequency domain resources are occupied and the occupation state that 1/2 frequency domain resources are occupied are represented with 0 and 1 respectively.

14. The apparatus of claim 9, wherein
the occupation state that all frequency domain resources are occupied, the occupation state that 1/2 frequency domain resources are occupied, the occupation state that 1/4 frequency domain resources are occupied and the occupation state that 1/8 frequency domain resources are occupied are represented with 00, 01, 10 and 11 respectively.

15. A non-transitory storage medium, storing computer-readable instructions, which when executed by at least one processor cause the at least one processor to perform the method claimed by any of claims 1-8.

## Patentansprüche

1. Verfahren zur Angabe von Belegung von Dienstressourcen mittels eines Angabekanals, umfassend:
Konfigurieren einer Zeitbereichsangabe und einer Frequenzbereichsangabe durch einen gNodeB zur Angabe von Belegung von Enhanced-Mobile-Broadband- bzw. eMBB-Dienstressourcen durch einen Ultra-Reliable-Low-Latency-Communication- bzw. URLLC-Dienst mittels eines Angabekanals, wobei für die Zeitbereichsangabe S Bit verwendet werden, um anzugeben, dass 2^{S}-1 mögliche Symbolpositionen in dem eMBB-Dienst an den URLLC-Dienst vergeben sind, und K-S Bit verwendet werden, um Dauerlänge des URLLC-Dienstes zu repräsentieren; für die Frequenzbereichsangabe T Bit verwendet werden, um 2^{T} Belegungszustände des eMBB-Dienstes zu repräsentieren, und der i-te Belegungszustand repräsentiert, dass 1/2ⁱ⁻¹ Frequenzbereichsressourcen belegt sind; K die Anzahl der Bit für die Zeitbereichsangabe ist, S eine ganze Zahl größer als 0 und kleiner als K ist, T die Anzahl der Bit für die Frequenzbereichsangabe ist und i eine ganze Zahl größer als 0 und kleiner oder gleich 2^{T} ist; wenn T gleich 1 ist, es zwei Belegungszustände des eMBB-Dienstes gibt und die zwei Belegungszustände des eMBB-Dienstes einen Belegungszustand, dass alle Frequenzbereichsressourcen belegt sind, und einen Belegungszustand, dass 1/2 Frequenzbereichsressourcen belegt sind, umfassen; wenn T gleich 2 ist, es vier Belegungszustände des eMBB-Dienstes gibt und die vier Belegungszustände des eMBB-Dienstes einen Belegungszustand, dass alle Frequenzbereichsressourcen belegt sind, einen Belegungszustand, dass 1/2 Frequenzbereichsressourcen belegt sind, einen Belegungszustand, dass 1/4 Frequenzbereichsressourcen belegt sind, und einen Belegungszustand, dass 1/8 Frequenzbereichsressourcen belegt sind, umfassen;
(101) beim Übertragen des URLLC-Dienstes während Übertragung des eMBB-Dienstes Bestimmen einer Symbolposition für die Übertragung des URLLC-Dienstes im Zeitbereich, wobei die Symbolposition der Übertragungszeit des URLLC-Dienstes unter den 2^{S}-1 möglichen Symbolpositionen am nächsten ist, und Bestimmen eines Belegungszustands der Frequenzbereichsressourcen gemäß der Menge an Daten des URLLC-Dienstes;
(102) Übertragen von Informationen des Angabekanals für den URLLC-Dienst, was Folgendes umfasst: gemäß der konfigurierten Zeitbereichsangabe, Bestimmen, dass S Bit verwendet werden, um die Symbolposition zu repräsentieren, die der Übertragungszeit des URLLC-Dienstes am nächsten ist, und Bestimmen, dass K-S Bit verwendet werden, um die Dauerlänge des URLLC-Dienstes zu repräsentieren; und gemäß der konfigurierten Frequenzbereichsangabe Bestimmen, dass T Bit verwendet werden, um den Belegungszustand zu repräsentieren, dass die Frequenzbereichsressourcen durch den URLLC-Dienst belegt werden; und
(103) beim Empfangen der Informationen des Angabekanals für den URLLC-Dienst Parsen von Inhalten des URLLC-Dienstes durch ein Benutzergerät UE gemäß einer Zeitbereichsangabe und einer Frequenzbereichsangabe zur Angabe der Belegung der eMBB-Dienstressourcen durch den URLLC-Dienst mittels des Angabekanals, die lokal gespeichert werden.

2. Verfahren nach Anspruch 1, wobei
S die ersten S aufeinanderfolgenden Bit oder die letzten S aufeinanderfolgenden Bit von K Bit repräsentieren.

3. Verfahren nach Anspruch 1, wobei
wenn K gleich 3 und S gleich 2 ist, drei mögliche Symbolpositionen in dem eMBB-Dienst an den URLLC-Dienst vergeben werden; wobei die drei Symbolpositionen das 2. Symbol, das 4. Symbol und das 6. Symbol umfassen, das 2. Symbol mit 00 repräsentiert wird, das 4. Symbol mit 01 repräsentiert wird und das 6. Symbol mit 10 repräsentiert wird.

4. Verfahren nach Anspruch 1, wobei
wenn K gleich 2 und S gleich 1 ist, eine mögliche Symbolposition in dem eMBB-Dienst an den URLLC-Dienst vergeben wird, wobei die Symbolposition das 4. Symbol ist und das 4. Symbol mit 0 repräsentiert wird.

5. Verfahren nach Anspruch 1, wobei
der Belegungszustand, dass alle Frequenzbereichsressourcen belegt sind, und der Belegungszustand, dass 1/2 Frequenzbereichsressourcen belegt sind, mit 0 bzw. 1 repräsentiert werden.

6. Verfahren nach Anspruch 1, wobei
der Belegungszustand, dass alle Frequenzbereichsressourcen belegt sind, der Belegungszustand, dass 1/2 Frequenzbereichsressourcen belegt sind, der Belegungszustand, dass 1/4 Frequenzbereichsressourcen belegt sind, und der Belegungszustand, dass 1/8 Frequenzbereichsressourcen belegt sind, mit 00, 01, 10 bzw. 11 repräsentiert werden.

7. Verfahren nach einem der Ansprüche 1 bis 6, wobei
eine Belegungsposition von Frequenzbereichsressourcen gemäß einer System-Vorgabefrequenzeinteilungsreihenfolge bestimmt wird.

8. Verfahren nach einem der Ansprüche 1 bis 6, wobei
die Zeitbereichsangabe und die Frequenzbereichsangabe zur Angabe der Belegung der eMBB-Dienstressourcen durch den URLLC-Dienst mittels des Angabekanals durch das UE konfiguriert und lokal gespeichert werden oder von dem gNodeB empfangen und durch das UE gespeichert werden.

9. Vorrichtung zur Angabe von Belegung von Ressourcen mittels eines Angabekanals, umfassend:
eine oder mehrere Speicherungen und
einen oder mehrere Prozessoren; wobei
die eine oder mehreren Speicherungen ein oder mehrere Anweisungsmodule speichern, die dafür ausgelegt sind, durch den einen oder die mehreren Prozessoren ausgeführt zu werden;
das eine oder die mehreren Anweisungsmodule Folgendes umfassen:
eine Konfiguriereinheit (401), ausgelegt zum Konfigurieren einer Zeitbereichsangabe und einer Frequenzbereichsangabe zur Angabe von Belegung von Enhanced-Mobile-Broadband- bzw. eMBB-Dienstressourcen durch einen Ultra-Reliable-Low-Latency-Communication- bzw. URLLC-Dienst mittels eines Angabekanals, **dadurch gekennzeichnet, dass** für die Zeitbereichsangabe S Bit verwendet werden, um anzugeben, dass 2^{S}-1 mögliche Symbolpositionen in dem eMBB-Dienst an den URLLC-Dienst vergeben sind, und K-S Bit verwendet werden, um Dauerlänge des URLLC-Dienstes zu repräsentieren; für die Frequenzbereichsangabe T Bit verwendet werden, um 2^{T} Belegungszustände des eMBB-Dienstes zu repräsentieren, und der i-te Belegungszustand repräsentiert, dass 1/2ⁱ⁻¹ Frequenzbereichsressourcen belegt sind; K die Anzahl der Bit für die Zeitbereichsangabe ist, S eine ganze Zahl größer als 0 und kleiner als K ist, T die Anzahl der Bit für die Frequenzbereichsangabe ist und i eine ganze Zahl größer als 0 und kleiner oder gleich 2^{T} ist; wenn T gleich 1 ist, es zwei Belegungszustände des eMBB-Dienstes gibt und die zwei Belegungszustände des eMBB-Dienstes einen Belegungszustand, dass alle Frequenzbereichsressourcen belegt sind, und einen Belegungszustand, dass 1/2 Frequenzbereichsressourcen belegt sind, umfassen; wenn T gleich 2 ist, es vier Belegungszustände des eMBB-Dienstes gibt und die vier Belegungszustände des eMBB-Dienstes einen Belegungszustand, dass alle Frequenzbereichsressourcen belegt sind, einen Belegungszustand, dass 1/2 Frequenzbereichsressourcen belegt sind, einen Belegungszustand, dass 1/4 Frequenzbereichsressourcen belegt sind, und einen Belegungszustand, dass 1/8 Frequenzbereichsressourcen belegt sind, umfassen;
eine Übertragungseinheit (402), die beim Übertragen des URLLC-Dienstes während Übertragung des eMBB-Dienstes für Folgendes ausgelegt ist: Bestimmen einer Symbolposition für die Übertragung des URLLC-Dienstes im Zeitbereich, wobei die Symbolposition der Übertragungszeit des URLLC-Dienstes unter den 2^{S}-1 möglichen Symbolpositionen am nächsten ist, und Bestimmen eines Belegungszustands der Frequenzbereichsressourcen gemäß der Menge an Daten des URLLC-Dienstes; Übertragen von Informationen des Angabekanals für den URLLC-Dienst, was Folgendes umfasst: gemäß der konfigurierten Zeitbereichsangabe, Bestimmen, dass S Bit verwendet werden, um die Symbolposition zu repräsentieren, die der Übertragungszeit des URLLC-Dienstes am nächsten ist, und Bestimmen, dass K-S Bit verwendet werden, um die Dauerlänge des URLLC-Dienstes zu repräsentieren; und gemäß der konfigurierten Frequenzbereichsangabe Bestimmen, dass T Bit verwendet werden, um den Belegungszustand zu repräsentieren, dass die Frequenzbereichsressourcen durch den URLLC-Dienst belegt werden; Befähigen eines Benutzergeräts UE, beim Empfangen von Informationen des Angabekanals für den URLLC-Dienst Inhalte des URLLC-Dienstes gemäß einer Zeitbereichsangabe und einer Frequenzbereichsangabe zur Angabe der Belegung der eMBB-Dienstressourcen durch den URLLC-Dienst mittels des Angabekanals, die lokal gespeichert werden, zu parsen.

10. Vorrichtung nach Anspruch 9, wobei
S die ersten S aufeinanderfolgenden Bit oder die letzten S aufeinanderfolgenden Bit von K Bit repräsentieren.

11. Vorrichtung nach Anspruch 9, wobei
wenn K gleich 3 und S gleich 2 ist, drei mögliche Symbolpositionen in dem eMBB-Dienst an den URLLC-Dienst vergeben werden; wobei die drei Symbolpositionen das 2. Symbol, das 4. Symbol und das 6. Symbol umfassen, das 2. Symbol mit 00 repräsentiert wird, das 4. Symbol mit 01 repräsentiert wird und das 6. Symbol mit 10 repräsentiert wird.

12. Vorrichtung nach Anspruch 9, wobei
wenn K gleich 2 und S gleich 1 ist, eine mögliche Symbolposition in dem eMBB-Dienst an den URLLC-Dienst vergeben wird, wobei die Symbolposition das 4. Symbol ist und das 4. Symbol mit 0 repräsentiert wird.

13. Vorrichtung nach Anspruch 9, wobei
der Belegungszustand, dass alle Frequenzbereichsressourcen belegt sind, und der Belegungszustand, dass 1/2 Frequenzbereichsressourcen belegt sind, mit 0 bzw. 1 repräsentiert werden.

14. Vorrichtung nach Anspruch 9, wobei
der Belegungszustand, dass alle Frequenzbereichsressourcen belegt sind, der Belegungszustand, dass 1/2 Frequenzbereichsressourcen belegt sind, der Belegungszustand, dass 1/4 Frequenzbereichsressourcen belegt sind, und der Belegungszustand, dass 1/8 Frequenzbereichsressourcen belegt sind, mit 00, 01, 10 bzw. 11 repräsentiert werden.

15. Nichtflüchtiges Speicherungsmedium, das computerlesbare Anweisungen speichert, die, wenn sie durch mindestens einen Prozessor ausgeführt werden, bewirken, dass der mindestens eine Prozessor das Verfahren nach einem der Ansprüche 1-8 ausführt.

## Revendications

1. Procédé pour indiquer l'occupation de ressources de service par l'intermédiaire d'un canal d'indication, le procédé comprenant les étapes suivantes :
configurer, par un gNodeB, une indication dans le domaine temporel et une indication dans le domaine fréquentiel pour indiquer l'occupation de ressources de service eMBB, Enhanced Mobile Broadband, par un service URLLC, Ultra Reliable Low Latency Communication, par l'intermédiaire d'un canal d'indication, où, pour l'indication dans le domaine temporel, S bits sont utilisés pour indiquer que 2^{S}-1 positions de symbole possibles dans le service eMBB sont attribuées au service URLLC, et K-S bits sont utilisés pour représenter la durée du service URLLC ; pour l'indication dans le domaine fréquentiel, T bits sont utilisés pour représenter 2^{T} états d'occupation du service eMBB, et le i^{ème} état d'occupation indique que 1/2ⁱ⁻¹ des ressources du domaine fréquentiel sont occupées ; K est le nombre de bits pour l'indication dans le domaine temporel, S est un nombre entier supérieur à 0 et inférieur à K, T est le nombre de bits pour l'indication dans le domaine fréquentiel, et i est un nombre entier supérieur à 0 et inférieur ou égal à 2^{T} ; lorsque T est égal à 1, il existe deux états d'occupation du service eMBB, et les deux états d'occupation du service eMBB comprennent un état d'occupation dans lequel toutes les ressources du domaine fréquentiel sont occupées et un état d'occupation dans lequel 1/2 des ressources du domaine fréquentiel sont occupées ; lorsque T est égal à 2, il y a quatre états d'occupation du service eMBB, et les quatre états d'occupation du service eMBB comprennent un état d'occupation dans lequel toutes les ressources du domaine fréquentiel sont occupées, un état d'occupation dans lequel 1/2 des ressources du domaine fréquentiel sont occupées, un état d'occupation dans lequel 1/4 des ressources du domaine fréquentiel sont occupées et un état d'occupation dans lequel 1/8 des ressources du domaine fréquentiel sont occupées ;
(101) lors de la transmission du service URLLC pendant la transmission du service eMBB, déterminer une position de symbole pour la transmission du service URLLC dans le domaine temporel, où la position de symbole est la plus proche du temps de transmission du service URLLC parmi les 2^{S}-1 positions de symbole possibles, et déterminer un état d'occupation des ressources du domaine fréquentiel en fonction de la quantité de données du service URLLC ;
(102) transmettre les informations du canal d'indication pour le service URLLC, ce qui comprend : selon l'indication de domaine temporel configurée, de déterminer que S bits sont utilisés pour représenter la position de symbole la plus proche du temps de transmission du service URLLC, et déterminer que K-S bits sont utilisés pour représenter la durée du service URLLC ; et selon l'indication configurée dans le domaine fréquentiel, de déterminer que T bits sont utilisés pour représenter l'état d'occupation des ressources dans le domaine fréquentiel par le service URLLC ; et
(103) lors de la réception des informations du canal d'indication pour le service URLLC, analyser, par un équipement d'utilisateur, UE, le contenu du service URLLC en fonction d'une indication de domaine temporel et d'une indication de domaine fréquentiel pour indiquer l'occupation des ressources de service eMBB par le service URLLC par le canal d'indication qui sont stockées localement.

2. Procédé selon la revendication 1, dans lequel :
S représente les premiers S bits consécutifs ou les derniers S bits consécutifs de K bits.

3. Procédé selon la revendication 1, dans lequel :
lorsque K est égal à 3 et que S est égal à 2, trois positions de symbole possibles dans le service eMBB sont attribuées au service URLLC ; où les trois positions de symbole comprennent le 2^{ième} symbole, le 4^{ième} symbole et le 6^{ième} symbole, le 2^{ième} symbole étant représenté par 00, le 4^{ième} symbole étant représenté par 01 et le 6^{ième} symbole étant représenté par 10.

4. Procédé selon la revendication 1, dans lequel :
lorsque K est égal à 2 et que S est égal à 1, une position de symbole possible dans le service eMBB est attribuée au service URLLC ; où la position de symbole est le 4^{ième} symbole, et le 4^{ième} symbole est représenté par 0.

5. Procédé selon la revendication 1, dans lequel :
l'état d'occupation dans lequel toutes les ressources du domaine fréquentiel sont occupées et l'état d'occupation dans lequel la moitié des ressources du domaine fréquentiel sont occupées sont respectivement représentés par 0 et 1.

6. Procédé selon la revendication 1, dans lequel :
l'état d'occupation dans lequel toutes les ressources du domaine fréquentiel sont occupées, l'état d'occupation dans lequel la moitié des ressources du domaine fréquentiel sont occupées, l'état d'occupation dans lequel 1/4 des ressources du domaine fréquentiel sont occupées et l'état d'occupation dans lequel 1/8 des ressources du domaine fréquentiel sont occupées sont respectivement représentés par 00, 01, 10 et 11.

7. Procédé selon l'une quelconque des revendications 1 à 6, dans lequel :
une position d'occupation des ressources du domaine fréquentiel est déterminée en fonction d'un ordre d'ordonnancement des fréquences par défaut du système.

8. Procédé selon l'une quelconque des revendications 1 à 6, dans lequel :
l'indication dans le domaine temporel et l'indication dans le domaine fréquentiel pour indiquer l'occupation des ressources de service eMBB par le service URLLC par l'intermédiaire du canal d'indication sont configurées et stockées localement par l'UE, ou sont reçues du gNodeB et sont stockées par l'UE.

9. Appareil permettant d'indiquer l'occupation de ressources par l'intermédiaire d'un canal d'indication, l'appareil comprenant :
une ou plusieurs mémoires de stockage, et
un ou plusieurs processeurs ; où
les une ou plusieurs mémoires de stockage stockent un ou plusieurs modules d'instruction, configurés pour être exécutés par les un ou plusieurs processeurs ;
les un ou plusieurs modules d'instruction comprennent :
une unité de configuration (401), configurée pour configurer une indication dans le domaine temporel et une indication dans le domaine fréquentiel pour indiquer l'occupation de ressources de service eMBB, Enhanced Mobile Broadband, par un service URLLC, Ultra Reliable Low Latency Communication, par l'intermédiaire d'un canal d'indication, **caractérisé en ce que**, pour l'indication dans le domaine temporel, S bits sont utilisés pour indiquer que 2^{S}-1 positions de symbole possibles dans le service eMBB sont attribuées au service URLLC, et K-S bits sont utilisés pour représenter la durée du service URLLC ; pour l'indication dans le domaine fréquentiel, T bits sont utilisés pour représenter 2^{T} états d'occupation du service eMBB, et le i^{ème} état d'occupation indique que 1/2ⁱ⁻¹ des ressources du domaine fréquentiel sont occupées ; K est le nombre de bits pour l'indication dans le domaine temporel, S est un nombre entier supérieur à 0 et inférieur à K, T est le nombre de bits pour l'indication dans le domaine fréquentiel, et i est un nombre entier supérieur à 0 et inférieur ou égal à 2^{T} ;
lorsque T est égal à 1, il existe deux états d'occupation du service eMBB, et les deux états d'occupation du service eMBB comprennent un état d'occupation dans lequel toutes les ressources du domaine fréquentiel sont occupées et un état d'occupation dans lequel 1/2 des ressources du domaine fréquentiel sont occupées ; lorsque T est égal à 2, il y a quatre états d'occupation du service eMBB, et les quatre états d'occupation du service eMBB comprennent un état d'occupation dans lequel toutes les ressources du domaine fréquentiel sont occupées, un état d'occupation dans lequel 1/2 des ressources du domaine fréquentiel sont occupées, un état d'occupation dans lequel 1/4 des ressources du domaine fréquentiel sont occupées et un état d'occupation dans lequel 1/8 des ressources du domaine fréquentiel sont occupées ;
une unité de transmission (402) configurée pour, lors de la transmission du service URLLC pendant la transmission du service eMBB, déterminer une position de symbole pour la transmission du service URLLC dans le domaine temporel, où la position de symbole est la plus proche du temps de transmission du service URLLC parmi les 2^{S}-1 positions de symbole possibles, et déterminer un état d'occupation des ressources du domaine fréquentiel en fonction de la quantité de données du service URLLC ;
transmettre les informations du canal d'indication pour le service URLLC, ce qui comprend : selon l'indication de domaine temporel configurée, de déterminer que S bits sont utilisés pour représenter la position de symbole la plus proche de l'heure de transmission du service URLLC, et de déterminer que K-S bits sont utilisés pour représenter la durée du service URLLC ; et selon l'indication de domaine fréquentiel configurée, de déterminer que T bits sont utilisés pour représenter l'état d'occupation des ressources dans le domaine fréquentiel par le service URLLC ; permettre à un équipement utilisateur, UE, lorsqu'il reçoit des informations du canal d'indication pour le service URLLC, d'analyser le contenu du service URLLC en fonction d'une indication de domaine temporel et d'une indication de domaine fréquentiel pour indiquer l'occupation des ressources de service eMBB par le service URLLC par le canal d'indication qui sont stockées localement.

10. Appareil selon la revendication 9, dans lequel :
S représente les S premiers bits consécutifs ou les S derniers bits consécutifs de K bits.

11. Appareil selon la revendication 9, dans lequel :
lorsque K est égal à 3 et que S est égal à 2, trois positions de symbole possibles dans le service eMBB sont attribuées au service URLLC ; où les trois positions de symbole comprennent le 2^{ième} symbole, le 4^{ième} symbole et le 6^{ième} symbole, le 2^{ième} symbole étant représenté par 00, le 4^{ième} symbole étant représenté par 01 et le 6^{ième} symbole étant représenté par 10.

12. Appareil selon la revendication 9, dans lequel :
lorsque K est égal à 2 et que S est égal à 1, une position de symbole possible dans le service eMBB est attribuée au service URLLC ; où la position de symbole est le 4^{ième} symbole, et le 4^{ième} symbole est représenté par 0.

13. Appareil selon la revendication 9, dans lequel :
l'état d'occupation dans lequel toutes les ressources du domaine fréquentiel sont occupées et l'état d'occupation dans lequel la moitié des ressources du domaine fréquentiel sont occupées sont respectivement représentés par 0 et 1.

14. Appareil selon la revendication 9, dans lequel :
l'état d'occupation dans lequel toutes les ressources du domaine fréquentiel sont occupées, l'état d'occupation dans lequel la moitié des ressources du domaine fréquentiel sont occupées, l'état d'occupation dans lequel 1/4 des ressources du domaine fréquentiel sont occupées et l'état d'occupation dans lequel 1/8 des ressources du domaine fréquentiel sont occupées sont respectivement représentés par 00, 01, 10 et 11.

15. Support de stockage non transitoire, stockant des instructions lisibles par ordinateur, qui, lorsqu'elles sont exécutées par au moins un processeur, amènent l'au moins un processeur à exécuter le procédé revendiqué par l'une quelconque des revendications 1 à 8.
